# FASCICULE DE BREVET EUROPEEN

(11) **EP 3 202 019 B1**
(45) Date de publication et mention de la délivrance du brevet: **15.05.2019**
(21) Numéro de dépôt: 15763965.9
(22) Date de dépôt: 02.09.2015
(51) Int. Cl.: H02K 11/00, H02K 11/04

(54) **MACHINE ÉLECTRIQUE TOURNANTE MUNIE D'UN MODULE CAPACITIF**
ELEKTRISCHE DREHMASCHINE MIT EINEM KAPAZITIVEN MODUL
ROTARY ELECTRICAL MACHINE PROVIDED WITH A CAPACITIVE MODULE

(30) Priorité: 02.10.2014 FR 1459412
(43) Date de publication de la demande: 09.08.2017
(73) Titulaire: Valeo Equipements Electriques Moteur, 94046 Créteil Cedex (FR)
(72) Inventeur: EL BARAKA, Khadija, F-77700 Serris (FR); JUGOVIC, Svetislav, F-91200 Athis-Mons (FR)
(86) Numéro de dépôt international: PCT/FR2015/052322
(87) Numéro de publication internationale: WO 2016/051033

(56) Documents cités:
- EP-A1- 1 286 449
- JP-A- H05 219 704

## Description

La présente invention porte sur une machine électrique tournante munie d'un module capacitif. L'invention trouve une application particulièrement avantageuse avec les alterno-démarreurs pour véhicules automobiles, mais pourrait également être utilisée avec des machines électriques tournantes de type moteur ou alternateur.

De façon connue en soi, les machines électriques tournantes comportent un stator et un rotor solidaire d'un arbre. Le rotor pourra être solidaire d'un arbre menant et/ou mené et pourra appartenir à une machine électrique tournante d'un alterno-démarreur. La machine électrique comporte un boîtier auquel est fixé le stator qui est configuré pour porter à rotation l'arbre par exemple par l'intermédiaire de roulements. Le rotor pourra comporter un corps réalisé en tôle feuilletée qui comporte des logements. Des aimants permanents sont positionnés à l'intérieur d'au moins certains de ces logements comme cela est enseigné par le document EP0803962.

Le stator, tel qu'employé dans l'équipement des véhicules automobiles, est habituellement constitué par un empilage de tôles minces formant une couronne, dont la face intérieure est pourvue d'encoches ouvertes vers l'intérieur recevant les bobinages des phases. Les types de bobinages les plus couramment utilisés sont, d'une part, les bobinages dits "concentriques" constitués par des bobines fermées sur elles-mêmes qui sont enroulées autour des dents du stator, et d'autre part, les bobinages du type dit "ondulé", qui sont connus par exemple par le document FR2483702.

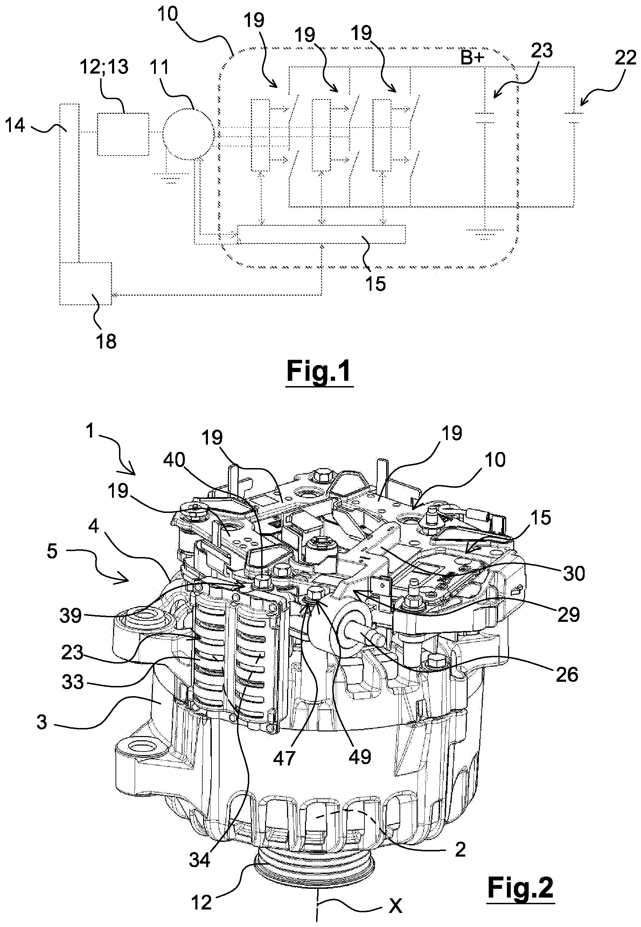

Un bloc électronique intégré 10 visible sur la figure 1 est apte à commander la machine électrique 11 de l'alterno-démarreur qui comporte une poulie 12 en prise avec une courroie 13 de la façade accessoire du moteur thermique 14 du véhicule. A cet effet, un module de contrôle 15 interagissant avec le calculateur moteur 18 est en relation avec des modules de puissance 19 intégrant des interrupteurs prenant généralement la forme de transistor MOS reliés aux différentes phases de la machine. La commande des modules de puissance 19 est effectuée notamment en fonction du niveau de courant circulant dans la machine, de la température du stator, de la position et de la vitesse du rotor, ainsi que de paramètres de fonctionnement du moteur thermique 14 retournés par le calculateur moteur 18.

Les modules de puissance 19 connectés à la batterie 22 du véhicule peuvent fonctionner en mode onduleur lorsque la machine électrique 11 fonctionne en mode moteur afin de transformer la tension continue de la batterie 22 en une tension alternative d'alimentation de la machine électrique 11. Cela est notamment le cas lorsque la machine transmet un couple au moteur thermique lors de son démarrage ou de son redémarrage automatique sollicité par un système appelé aussi "Stop and Start" en anglais.

Les modules de puissance 19 peuvent aussi fonctionner en mode redresseur de tension lorsque la machine électrique 11 fonctionne en mode alternateur afin de transformer la tension alternative générée par la machine électrique 11 entraînée par le moteur thermique en une tension continue compatible avec la batterie 22. Cela est notamment le cas lorsque l'alterno-démarreur fournit de la puissance aux accessoires ou produit de l'électricité lors des phases de décélérations du véhicule.

Toutefois, la commande de la machine électrique 11 par modulation par largeur d'impulsions engendre une variation d'intensité (I) suivant une durée (t) très courte. En conséquence, la tension résultante égale à Ldl/dt (L étant l'inductance de câblage entre la borne positive B+ de la batterie 22 et les transistors de puissance) qui est appliquée sur les modules de puissance 19 est très élevée. Afin de réduire cette tension, il est connu de réduire l'inductance de câblage L en introduisant un module capacitif 23 de filtrage connecté aux bornes de la batterie 22. L'invention vise à optimiser l'intégration du module capacitif 23 compte tenu des contraintes d'encombrement très strictes sous le capot du véhicule.

Les documents JPH05 219704 A et EP 1 286 449 A1 décrivent des machines électriques tournantes de l'état de la technique.

A cet effet, l'invention propose une machine électrique tournante munie d'un axe, pour un véhicule automobile muni d'une batterie, comprenant:
- un boîtier extérieur,
- un rotor tournant autour de l'axe de la machine,
- un stator entourant ledit rotor,
- un bloc électronique intégré comprenant des modules de puissance, ledit bloc électronique intégré ayant une borne positive B+ destinée à être reliée à la borne positive de la batterie du véhicule,
- au moins un module capacitif comprenant au moins un condensateur et un boîtier recevant ledit au moins un condensateur,
caractérisée en ce que ledit boîtier comprend une borne négative et une première trace de connexion dite négative qui est reliée d'une part à la polarité négative du au moins un condensateur et d'autre part à ladite borne négative dudit boîtier, et
en ce que ladite machine électrique comprend en outre des moyens de fixation qui relient mécaniquement et électriquement ladite borne négative dudit boîtier à une partie dudit boîtier extérieur formant une masse de ladite machine électrique et
en ce que ledit boîtier comprend un réceptacle pour recevoir le au moins un condensateur et un couvercle de fermeture.

Selon une réalisation, ledit boîtier dudit module capacitif comprend une borne positive et une deuxième trace de connexion dite positive qui est destinée à être reliée d'une part à la polarité positive du au moins un condensateur et d'autre part à ladite borne positive dudit boîtier, et en ce que ladite machine électrique comprend en outre des moyens de connexion qui relient électriquement ladite borne positive dudit boîtier à ladite borne B+.

Selon une réalisation, ladite machine électrique comporte un interconnecteur comportant une trace reliée à ladite borne B+ et à la borne positive via les moyens de connexion. Cela permet de simplifier la connexion de la borne positive à la borne B+. Ainsi, l'intégration et l'encombrement du module capacitif sont optimisés.

Selon une réalisation, ladite machine électrique comprend un interconnecteur et en ce que lesdits moyens de connexion comprennent:
- une trace dudit interconnecteur reliée à ladite borne B+, ladite trace ayant une terminaison annulaire, et
- des moyens de plaquage de ladite borne positive dudit boîtier sur ladite terminaison annulaire assurant en outre une fixation dudit boîtier sur ledit interconnecteur.

Selon une réalisation, lesdits moyens de plaquage comprennent une vis fixée audit boîtier extérieur et un élément d'isolation intercalé entre ladite vis et ladite borne positive dudit boîtier du module capacitif.

Selon une réalisation, lesdits moyens de connexion comprennent une fourchette ayant à une extrémité une forme complémentaire d'un pion de ladite borne B+ et à son autre extrémité une connexion à ladite borne positive dudit boîtier du module capacitif.

Selon une réalisation, ledit boîtier extérieur a une forme sensiblement cylindrique et ledit boîtier dudit module capacitif est plaqué sur le pourtour dudit boîtier extérieur en sorte que ledit boîtier dudit module capacitif présente une épaisseur orientée suivant une direction radiale dudit boîtier extérieur.

Selon une réalisation, ladite machine électrique comprend un interconnecteur et lesdits moyens de connexion comprennent une trace dudit interconnecteur reliée à ladite borne B+ sur laquelle est soudée ladite borne positive dudit boîtier du module capacitif.

Selon une réalisation, ledit bloc électronique intégré comprend un module de contrôle assurant une commande desdits modules de puissance, et ledit boîtier du module capacitif est positionné au-dessus dudit module de contrôle.

Selon une réalisation, ledit module de contrôle est alimenté via ladite borne positive dudit boîtier du module capacitif.

Selon une réalisation, ladite machine électrique comprend un module capacitif positionné au-dessus de chaque module de puissance.

Selon une réalisation, ledit couvercle de fermeture est muni d'au moins une ouverture traversante de refroidissement.

Selon une réalisation, au moins un élément d'amortissement s'étend entre une face dudit boîtier et le au moins un condensateur.

Selon une réalisation, ledit module capacitif comprend un matériau de remplissage d'au moins une partie du vide laissé par le au moins un condensateur dans ledit réceptacle.

Selon une réalisation, ledit boîtier dudit module capacitif peut recevoir deux types de traces de connexion négatives, chacun des deux types de traces étant respectivement adapté à un condensateur de type axial ou de type radial.

En outre, la machine électrique tournante telle que précédemment décrite peut, avantageusement, former un alternateur ou une machine réversible.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une représentation schématique d'un bloc électronique intégré permettant la commande d'un alterno-démarreur selon la présente invention;
La figure 2 est une vue en perspective illustrant l'intégration d'un module capacitif sur un alterno-démarreur suivant un premier mode de réalisation de l'invention;
La figure 3 est une vue en coupe de la connexion et de la fixation entre la borne négative du module capacitif et la partie du boîtier extérieur de l'alterno-démarreur formant la masse;
La figure 4 est une vue en coupe de la connexion et de la fixation entre la borne positive du module capacitif et la trace de l'interconnecteur reliée à la borne B+ du bloc électronique intégré;
La figure 5 est une vue en perspective illustrant l'intégration d'un module capacitif sur un alterno-démarreur suivant un deuxième mode de réalisation de l'invention;
Les figures 6a et 6b sont respectivement des vues en perspective et en perspective éclatée illustrant un troisième mode de réalisation de l'invention;
La figure 7 est une vue en perspective illustrant l'intégration d'un module capacitif suivant un quatrième mode de réalisation de l'invention;
Les figures 8a et 8b sont des représentations en perspective d'un module capacitif selon la présente invention suivant deux angles de vue opposés l'un par rapport à l'autre;
La figure 9 est une vue en coupe transversale du module capacitif des figures 8a et 8b;
La figure 10 est une vue en perspective du couvercle de fermeture du module capacitif des figures 8a et 8b;
Les figures 11a et 11b illustrent la configuration du boîtier et des traces du module capacitif selon la présente invention pour une utilisation avec des condensateurs de type axial;
Les figures 12a et 12b illustrent la configuration du boîtier et des traces du module capacitif selon la présente invention pour une utilisation avec des condensateurs de type radial.

Les éléments identiques, similaires, ou analogues conservent la même référence d'une figure à l'autre.

La figure 2 montre un alterno-démarreur 1 de véhicule automobile comportant un stator entourant un rotor d'axe X correspondant à l'axe de la machine. Ce rotor est monté sur un arbre 2 apte à tourner autour de l'axe X dans des paliers supportés par des flasques avant 3 et arrière 4. Ces flasques 3, 4 forment le boîtier extérieur 5 de l'alterno-démarreur 1 de forme sensiblement cylindrique dont est solidaire le stator. Une extrémité de l'arbre 2 sort de l'alterno-démarreur 1 et porte la poulie 12 permettant la liaison mécanique de cet alterno-démarreur 1 avec le moteur thermique du véhicule par l'intermédiaire d'une courroie (non représentée).

Le bloc électronique intégré 10 est apte à commander l'alterno-démarreur 1. A cet effet, un module de contrôle 15 est en relation avec des modules de puissance 19 intégrant des interrupteurs prenant généralement la forme de transistor MOS reliés aux différentes phases de la machine électrique.

Afin d'assurer l'alimentation des différents éléments, le bloc électronique intégré 10 comporte une borne positive B+ référencée 26 qui est destinée à être reliée à la borne positive de la batterie du véhicule (non représentée). En outre, un interconnecteur 29 comporte une trace surmoulée 30 issue de la borne positive B+ 26 parcourant le bloc intégré et à laquelle sont reliés électriquement les différents éléments à alimenter.

Par ailleurs, un module capacitif 23 comprenant un boîtier 33 recevant des condensateurs 34 permet de réduire l'inductance de câblage entre la borne B+ 26 et les modules de puissance 19.

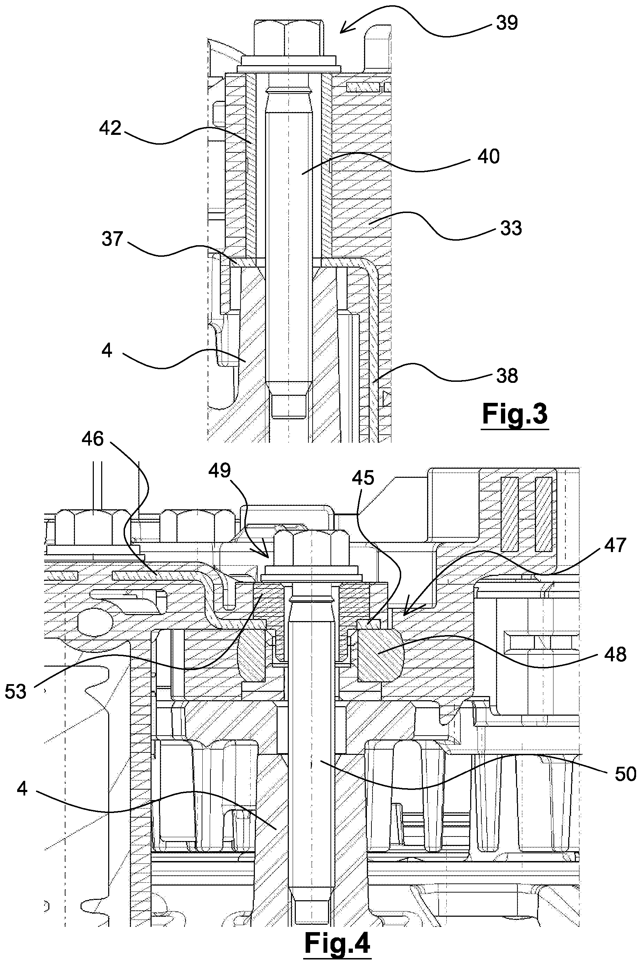

Comme cela est mieux visible en figure 3, le boîtier 33 comprend une borne négative 37 et une trace de connexion 38, dite négative, qui est reliée d'une part à la polarité négative des condensateurs 34 et d'autre part à la borne négative 37 du boîtier 33. Des moyens de fixation 39 relient mécaniquement et électriquement la borne négative 37 du boîtier 33 à une partie du boîtier extérieur 5 formant la masse. A cet effet, les moyens de fixation 39 comportent une vis 40 orientée axialement par rapport au boîtier extérieur 5 traversant un insert métallique 42 de forme tubulaire ayant une fonction de rigidification, ainsi que la borne négative 37 pour sa fixation sur le flasque arrière 4 du boîtier extérieur 5. Le contact entre la borne négative 37 du boîtier 33 et le boîtier 5 de la machine est ainsi garanti par l'effort de serrage entre la tête de la vis 40 et le flasque arrière 4.

Comme illustré à la figure 4, le boîtier 33 du module capacitif 23 comprend en outre une borne positive 45 et une trace de connexion 46 dite positive qui est reliée d'une part à la polarité positive des condensateurs 34 et d'autre part à la borne positive 45 du boîtier 33. Des moyens de connexion 47 relient électriquement la borne positive 45 du boîtier 33 à la borne B+ 26.

Dans le mode de réalisation des figures 2 et 4, les moyens de connexion 47 comprennent une terminaison annulaire 48 intégrée dans la trace 30 de l'interconnecteur 29, ainsi que des moyens de plaquage 49 de la borne positive 45 du boîtier 33 sur la terminaison annulaire 48 assurant en outre une fixation du boîtier 33 sur l'interconnecteur 29. A cet effet, les moyens de plaquage 49 comprennent une vis 50 passant par l'ouverture de la borne positive 45 de forme annulaire, ainsi que par l'ouverture de la terminaison annulaire 48 pour sa fixation sur le boîtier extérieur 5. Le contact entre la borne positive 45 du boîtier 33 et la terminaison annulaire 48 est ainsi garanti par l'effort de serrage entre la tête de la vis 50 et le flasque arrière 4 qui permet de plaquer l'une contre l'autre les faces annulaires d'orientation radiale de la terminaison annulaire 48 et de la borne positive 45.

En outre, un élément d'isolation 53, qui est constitué dans le cas présent par un insert tubulaire réalisé dans un matériau isolant électriquement, s'étend entre la tige de la vis 50 et la borne positive 45 du module capacitif 23. Le positionnement de l'insert 53 permet d'éviter d'éventuels court-circuits entre le flasque arrière 4 relié à la masse et la borne positive 45 du module capacitif reliée à la borne B+.

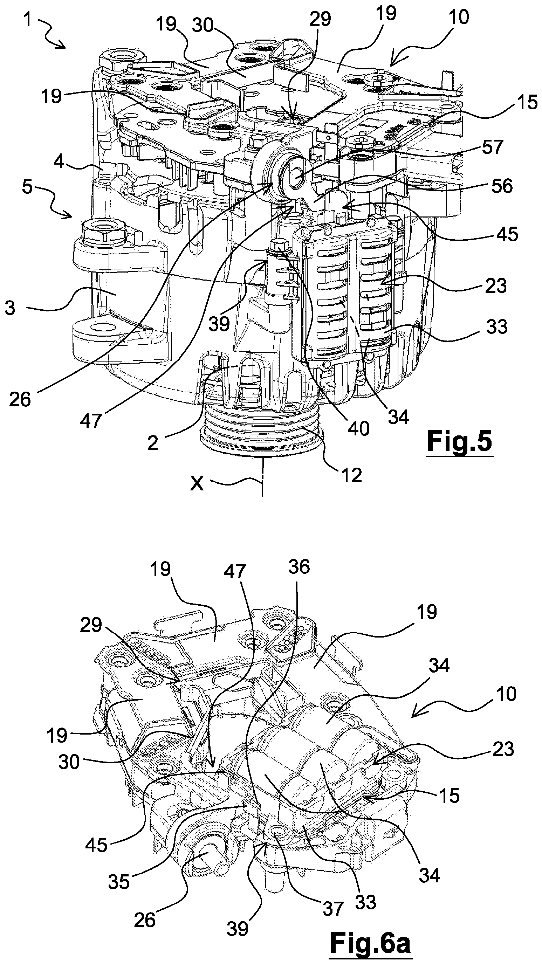

Dans le mode de réalisation de la figure 5, les moyens de connexion 47 comprennent une fourchette 56. Cette fourchette 56 présente une extrémité en forme de U ayant une forme complémentaire au pion 57 formant la borne B+ 26. La fourchette 56 présente à son autre extrémité une connexion à la borne positive 45 du boîtier 33 du module capacitif 23.

Dans les deux modes de réalisation des figures 2 et 5, le boîtier 33 du module capacitif 23 est plaqué sur le pourtour du boîtier extérieur 5, en sorte que le boîtier 33 du module capacitif 23 présente une épaisseur orientée suivant une direction radiale du boîtier extérieur 5.

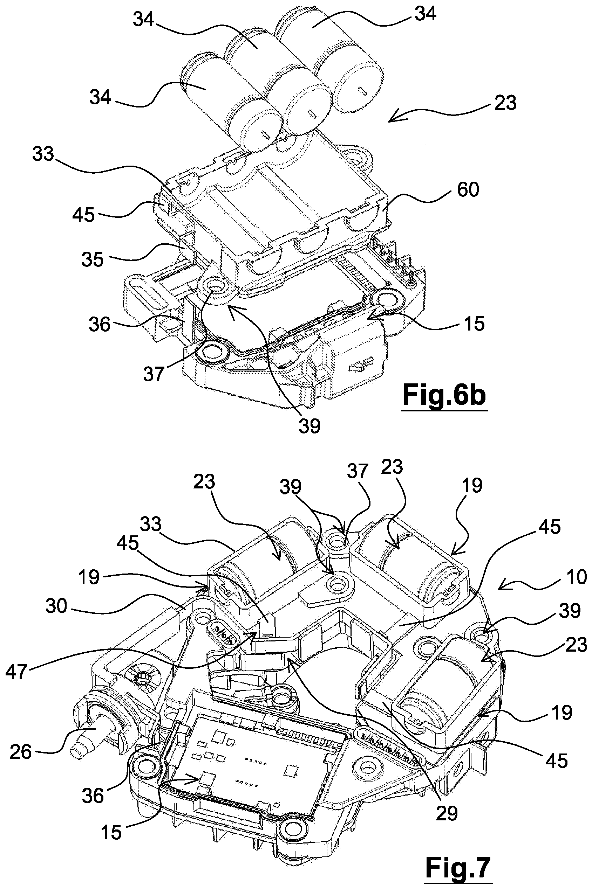

En variante, comme cela est montré sur les figures 6a, 6b ou 7, le ou les modules capacitifs 23 sont positionnés au-dessus du bloc électronique intégré 10, en sorte que l'épaisseur du module capacitif 23 est orientée suivant une direction axiale du boîtier extérieur 5. Le choix du positionnement du module capacitif 23 (sur le pourtour ou à une extrémité du boîtier 5 portant le bloc électronique intégré 10) est effectué en fonction des contraintes d'encombrement sous le capot du véhicule.

Plus précisément, dans le mode de réalisation des figures 6a et 6b, le module capacitif 23 contenant trois condensateurs 34 est positionné au-dessus du module de contrôle 15. Dans ce cas, le module de contrôle 15 est alimenté via la borne positive 45 du boîtier 33 du module capacitif 23. En effet, la borne positive du boîtier 33 soudée à l'interconnecteur 29 se prolonge de manière à présenter une extrémité 35 elle-même soudée sur une patte 36 reliée à la polarité positive du module de contrôle 15. Une telle configuration permet d'améliorer le filtrage des signaux de commande du fait de la proximité des condensateurs 34 avec le module de contrôle 15.

Le module capacitif 23 pourra par exemple être monté par encliquetage dans un logement du module de contrôle 15 de forme complémentaire.

Par ailleurs, les moyens de fixation 39 sont formés dans le cas présent par une vis (non représentée) d'orientation axiale destinée à traverser une oreille saillante du boîtier 33 dans laquelle se trouve la borne négative 37 de manière à assurer la connexion de cette borne 37 et sa fixation au flasque arrière 4 dans lequel est reçue la vis.

Dans le mode de réalisation de la figure 7, le bloc électronique intégré 10 comprend un module capacitif 23 positionné au-dessus de chaque module de puissance 19. En l'occurrence, trois modules capacitifs 23 comportent chacun un condensateur 34 et chaque module capacitif 23 muni de son condensateur 34 est positionné au-dessus d'un module de puissance 19. La borne positive 45 de chaque boîtier 33 des modules capacitifs 23 est soudée sur la trace 30 de l'interconnecteur 29 reliée à la borne B+ 26 formant dans ce cas les moyens de connexion 47. Par ailleurs, la borne négative 37 du boîtier 33 est reliée à la masse de la machine électrique via des moyens de fixation 39 identiques à ceux du mode de réalisation des figures 6a et 6b.

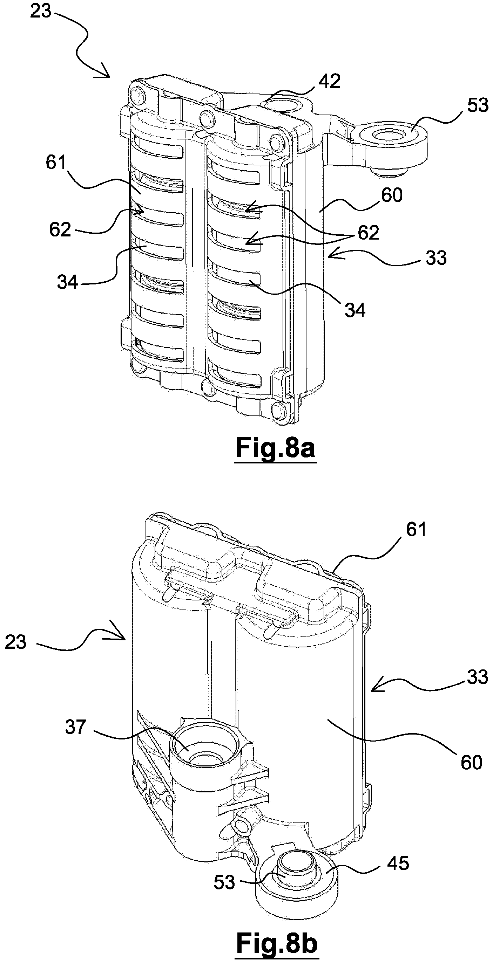

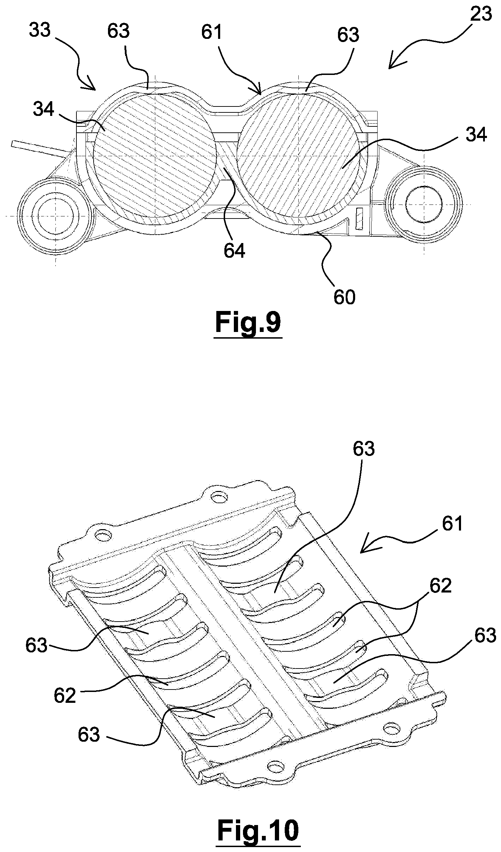

Comme cela est montré sur les figures 8a, 8b, et 9, le boîtier 33 du module capacitif 23 comporte un réceptacle 60 pour recevoir les condensateurs 34 ici de forme cylindrique ainsi qu'un couvercle de fermeture 61 bien visible sur la figure 10. De préférence, le couvercle de fermeture 61 est muni d'ouvertures 62 traversant l'épaisseur du couvercle 61 pour refroidir les condensateurs 34 en cours d'utilisation. Ces ouvertures 62 pourront être utilisées pour autoriser le passage d'un flux d'air destiné à venir lécher les condensateurs 34 ou alternativement pour autoriser le passage d'un conduit (non représenté) dans lequel circule un liquide de refroidissement venant prélever des calories au niveau du module capacitif 23.

En outre, comme on peut le voir clairement sur les figures 9 et 10, des éléments d'amortissement 63 s'étendent entre une face du boîtier 33 et chaque condensateur 34. Ces éléments d'amortissement 63 permettent d'assurer un calage des condensateurs 34 à l'intérieur du boîtier 33. Ces éléments d'amortissement 63 pourront par exemple être constitués chacun par une protubérance bombée s'étendant vers l'intérieur du réceptacle 60 qui est issue du couvercle 61. Avantageusement, les éléments d'amortissement 63 pourront être situés du côté des condensateurs 34 de type radial qui ne présentent pas de connexions électriques en sorte que les condensateurs 34 sont plus sensibles aux vibrations de ce côté.

Le calage des condensateurs 34 est amélioré par l'utilisation d'un matériau de remplissage 64 d'au moins une partie du vide laissé par les condensateurs 34 dans le réceptacle 60 (cf. figure 9). Ce matériau de remplissage 64 laisse au moins un tiers du volume de chaque condensateur 34 non couvert. En l'occurrence, environ la moitié du volume du réceptacle 60 est rempli du matériau de remplissage 64, tel que du silicone.

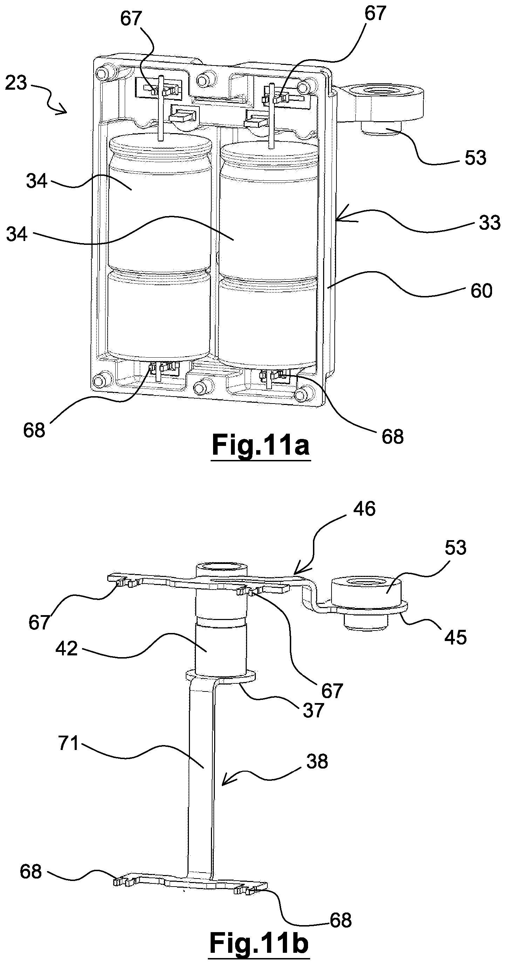

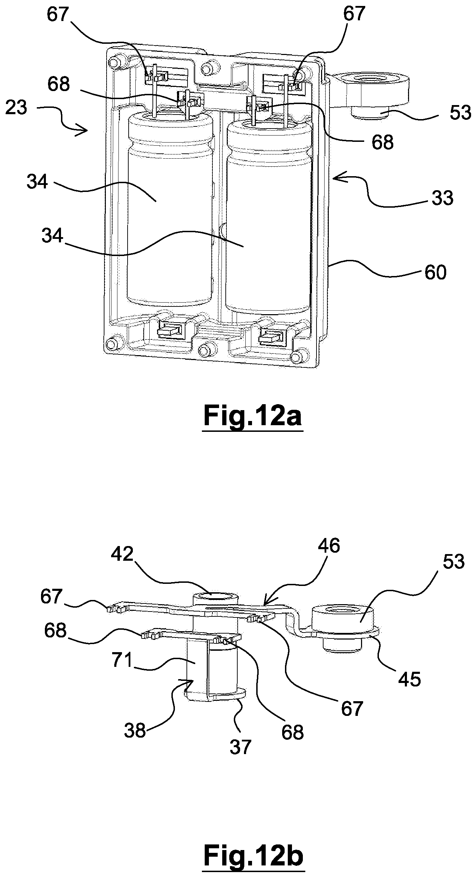

Comme cela est illustré sur les figures 11a, 11b, 12a et 12b, le boîtier 33 est configuré pour recevoir différentes traces adaptées à différents types de condensateurs 34. En effet, on distingue un premier type de condensateur 34 dit "axial" (cf. figures 11a) dont la polarité négative et la polarité positive sont situées aux deux extrémités axiales opposées du condensateur 34; et un deuxième type de condensateur 34 dit "radial" (cf. figure 12a) dont la polarité négative et la polarité négative sont situées d'un même côté axial.

Pour les deux types de condensateurs 34, on utilise un même boîtier 33 et une même trace de connexion positive 46. Cette trace de connexion positive 46 comporte deux pattes 67 à une de ses extrémités destinées à être connectées aux polarités positives des condensateurs 34, et à l'autre extrémité la borne positive 45 coopérant avec l'insert isolant 53.

Toutefois, le boîtier 33 peut recevoir deux modèles différents de traces de connexion négative 37, chacun des deux types étant respectivement adapté à un condensateur 34 de type axial ou de type radial.

En effet, dans le cas de l'utilisation de condensateurs 34 de type axial illustrée sur les figures 11a et 11b, la trace de connexion négative 38 présente deux pattes 68 destinées à être connectées aux polarités négatives des condensateurs 34 et situées du côté opposé par rapport aux pattes 67 de la trace de connexion positive 46. Les pattes 68 sont issues d'un bras 71 établissant un contact, via la borne négative 37, avec une extrémité inférieure de l'insert cylindrique 42 en matériau conducteur.

Dans le cas de l'utilisation de condensateurs 34 de type radial illustrée sur les figures 12a et 12b, la trace de connexion négative 37 présente deux pattes 68 destinées à être connectées aux polarités négatives des condensateurs 34 et situées du même côté que les pattes 67 de la trace de connexion positive 46. Les pattes 68 sont issues du bras 71 établissant un contact, via la borne négative 37, avec une extrémité inférieure de l'insert cylindrique 42.

Il est à noter que dans le cas des condensateurs 34 de type axial, le bras 71 s'étend en direction des pattes 67 de polarité positive pour rejoindre l'extrémité de l'insert 42 située dans la partie centrale du boîtier 33, tandis que dans le cas des condensateurs 34 de type radial, le bras 71 s'étend dans la direction opposée afin de rejoindre la même extrémité inférieure de l'insert 42.

Dans chaque trace de connexion (positive 46 ou négative 38), les deux chemins électriques allant de chaque patte destinée à être connectée à une polarité d'un condensateur 34 à la borne correspondante ont une longueur sensiblement identique. Une telle configuration permet d'équilibrer les courants passant dans les condensateurs 34.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Machine électrique tournante (1) munie d'un axe (X), pour un véhicule automobile muni d'une batterie, comprenant:
- un boîtier extérieur (5),
- un rotor tournant autour dudit axe (X) de la machine,
- un stator entourant ledit rotor,
- un bloc électronique intégré (10) comprenant des modules de puissance (19), ledit bloc électronique intégré (10) ayant une borne positive B+ (26) destinée à être reliée à la borne positive de la batterie du véhicule,
- au moins un module capacitif (23) comprenant au moins un condensateur (34) et un boîtier (33) recevant ledit au moins un condensateur (34),
ledit boîtier (33) comprend une borne négative (37) et une première trace de connexion (38) dite négative qui est reliée d'une part à la polarité négative du au moins un condensateur (34) et d'autre part à ladite borne négative (37) dudit boîtier (33),
en ce que ladite machine électrique comprend en outre des moyens de fixation (39) qui relient mécaniquement et électriquement ladite borne négative (37) dudit boîtier (33) à une partie dudit boîtier extérieur (5) formant une masse de ladite machine électrique, **caractérisée**
**en ce que** ledit boîtier (33) comprend un réceptacle (60) pour recevoir le au moins un condensateur (34) et un couvercle de fermeture (61).

2. Machine selon la revendication 1, **caractérisée en ce que** ledit boîtier (33) dudit module capacitif (23) comprend une borne positive (45) et une deuxième trace de connexion (46) dite positive qui est destinée à être reliée d'une part à la polarité positive (45) du au moins un condensateur (34) et d'autre part à ladite borne positive (45) dudit boîtier (33), et
**en ce que** ladite machine électrique comprend en outre des moyens de connexion (47) qui relient électriquement ladite borne positive dudit boîtier (33) à ladite borne B+ (26).

3. Machine selon la revendication 2, **caractérisée en ce que** ladite machine électrique (1) comprend un interconnecteur (29) et **en ce que** lesdits moyens de connexion (47) comprennent :
- une trace (30) dudit interconnecteur (29) reliée à ladite borne B+ (26), ladite trace (30) ayant une terminaison annulaire (48), et
- des moyens de plaquage (49) de ladite borne positive (45) dudit boîtier (33) sur ladite terminaison annulaire (48) assurant en outre une fixation dudit boîtier (33) sur ledit interconnecteur (29).

4. Machine selon la revendication 3, **caractérisée en ce que** lesdits moyens de plaquage comprennent une vis fixée audit boîtier extérieur (5) et un élément d'isolation (53) intercalé entre ladite vis et ladite borne positive (45) dudit boîtier (33) du module capacitif.

5. Machine selon la revendication 2, **caractérisée en ce que** lesdits moyens de connexion (47) comprennent une fourchette (56) ayant à une extrémité une forme complémentaire d'un pion (57) de ladite borne B+ (26) et à son autre extrémité une connexion à ladite borne positive (45) dudit boîtier (33).

6. Machine selon l'une quelconque des revendications 3 à 5, **caractérisée en ce que** ledit boîtier extérieur (5) a une forme sensiblement cylindrique et **en ce que** ledit boîtier (33) dudit module capacitif (23) est plaqué sur le pourtour dudit boîtier extérieur (5) en sorte que ledit boîtier (33) dudit module capacitif (23) présente une épaisseur orientée suivant une direction radiale dudit boîtier extérieur (5).

7. Machine selon la revendication 2, **caractérisée en ce que** ladite machine électrique (1) comprend un interconnecteur (29) et **en ce que** lesdits moyens de connexion (47) comprennent une trace (30) dudit interconnecteur (29) reliée à ladite borne B+ (26) sur laquelle est soudée ladite borne positive (45) dudit boîtier (33) du module capacitif.

8. Machine selon la revendication 7, **caractérisée en ce que** ledit bloc électronique intégré (10) comprend un module de contrôle (15) assurant une commande desdits modules de puissance (19), et **en ce que** ledit boîtier (33) du module capacitif est positionné au-dessus dudit module de contrôle (15).

9. Machine selon la revendication 8, **caractérisée en ce que** ledit module de contrôle (15) est alimenté via ladite borne positive (45) dudit boîtier (33) du module capacitif.

10. Machine selon la revendication 7, **caractérisée en ce que** ladite machine électrique (1) comprend un module capacitif (23) positionné au-dessus de chaque module de puissance (19).

11. Machine selon l'une quelconque des revendications 1 à 10, **caractérisée en ce que** ledit couvercle de fermeture (61) est muni d'au moins une ouverture (62) traversante de refroidissement.

12. Machine selon l'une quelconque des revendications 1 à 11, **caractérisée en ce qu'**au moins un élément d'amortissement (63) s'étend entre une face dudit boîtier (33) du module capacitif et le au moins un condensateur (34).

13. Machine selon l'une quelconque des revendications 1 à 12, **caractérisée en ce que** ledit module capacitif (23) comprend un matériau de remplissage (64) d'au moins une partie du vide laissé par le au moins un condensateur (34) dans ledit réceptacle (60).

14. Machine selon l'une quelconque des revendications 1 à 13, **caractérisée en ce que** ledit boîtier (33) dudit module capacitif (23) peut recevoir deux types de traces de connexion négatives (38), chacun des deux types de traces étant respectivement adapté à un condensateur (34) de type axial ou de type radial.

## Patentansprüche

1. Elektrische Rotationsmaschine (1), die mit einer Achse (X) versehen ist, für ein Kraftfahrzeug, das mit einer Batterie versehen ist, umfassend:
- ein äußeres Gehäuse (5),
- einen Rotor, der um die Achse (X) der Maschine rotiert,
- einen Stator, der den Rotor umgibt,
- einen integrierten Elektronikblock (10), der Leistungsmodule (19) umfasst, wobei der integrierte Elektronikblock (10) eine positive Klemme B+ (26) aufweist, die dazu bestimmt ist, mit dem Pluspol der Batterie des Fahrzeugs verbunden zu werden,
- wenigstens ein kapazitives Modul (23), das wenigstens einen Kondensator (34) und ein Gehäuse (33), das den wenigstens einen Kondensator (34) aufnimmt, umfasst,
das Gehäuse (33) umfasst eine negative Klemme (37) und eine erste, sogenannte negative Verbindungsschiene (38), welche einerseits mit dem Minuspol des wenigstens einen Kondensators (34) und andererseits mit der negativen Klemme (37) des Gehäuses (33) verbunden ist,
dass die elektrische Maschine außerdem Befestigungsmittel (39) umfasst, welche die negative Klemme (37) des Gehäuses (33) mechanisch und elektrisch mit einem Teil des äußeren Gehäuses (5) verbinden, der eine Masse der elektrischen Maschine bildet,
**dadurch gekennzeichnet, dass** das Gehäuse (33) einen Aufnahmebehälter (60) zum Aufnehmen des wenigstens einen Kondensators (34) und einen Verschlussdeckel (61) umfasst.

2. Maschine nach Anspruch 1, **dadurch gekennzeichnet, dass** das Gehäuse (33) des kapazitiven Moduls (23) eine positive Klemme (45) und eine zweite, sogenannte positive Verbindungsschiene (46), welche dazu bestimmt ist, einerseits mit dem Pluspol (45) des wenigstens einen Kondensators (34) und andererseits mit der positiven Klemme (45) des Gehäuses (33) verbunden zu werden, umfasst, und dadurch, dass die elektrische Maschine außerdem Verbindungsmittel (47) umfasst, welche die positive Klemme des Gehäuses (33) elektrisch mit der Klemme B+ (26) verbinden.

3. Maschine nach Anspruch 2, **dadurch gekennzeichnet, dass** die elektrische Maschine (1) einen Zwischenverbinder (29) umfasst, und dadurch, dass die Verbindungsmittel (47) umfassen:
- eine Schiene (30) des Zwischenverbinders (29), die mit der Klemme B+ (26) verbunden ist, wobei die Schiene (30) ein ringförmiges Endstück (48) aufweist, und
- Mittel zum Anpressen (49) der positiven Klemme (45) des Gehäuses (33) an das ringförmige Endstück (48), die außerdem eine Befestigung des Gehäuses (33) an dem Zwischenverbinder (29) sicherstellen.

4. Maschine nach Anspruch 3, **dadurch gekennzeichnet, dass** die Mittel zum Anpressen eine Schraube, die am äußeren Gehäuse (5) befestigt ist, und ein Isolationselement (53), das zwischen der Schraube und der positiven Klemme (45) des Gehäuses (33) des kapazitiven Moduls angeordnet ist, umfassen.

5. Maschine nach Anspruch 2, **dadurch gekennzeichnet, dass** die Verbindungsmittel (47) eine Gabel (56) umfassen, die an einem Ende eine Form, die zu einem Stift (57) der Klemme B+ (26) komplementär ist, und an ihrem anderen Ende eine Verbindung mit der positiven Klemme (45) des Gehäuses (33) aufweist.

6. Maschine nach einem der Ansprüche 3 bis 5, **dadurch gekennzeichnet, dass** das äußere Gehäuse (5) eine im Wesentlichen zylindrische Form hat, und dadurch, dass das Gehäuse (33) des kapazitiven Moduls (23) auf den Außenumfang des äußeren Gehäuses (5) gepresst wird, derart, dass das Gehäuse (33) des kapazitiven Moduls (23) eine Dicke aufweist, die in einer radialen Richtung des äußeren Gehäuses (5) ausgerichtet ist.

7. Maschine nach Anspruch 2, **dadurch gekennzeichnet, dass** die elektrische Maschine (1) einen Zwischenverbinder (29) umfasst, und dadurch, dass die Verbindungsmittel (47) eine mit der Klemme B+ (26) verbundene Schiene (30) des Zwischenverbinders (29) umfassen, an welche die positive Klemme (45) des Gehäuses (33) des kapazitiven Moduls angeschweißt ist.

8. Maschine nach Anspruch 7, **dadurch gekennzeichnet, dass** der integrierte Elektronikblock (10) ein Steuerungsmodul (15) umfasst, das eine Steuerung der Leistungsmodule (19) sicherstellt, und dadurch, dass das Gehäuse (33) des kapazitiven Moduls über dem Steuerungsmodul (15) positioniert ist.

9. Maschine nach Anspruch 8, **dadurch gekennzeichnet, dass** das Steuerungsmodul (15) über die positive Klemme (45) des Gehäuses (33) des kapazitiven Moduls gespeist wird.

10. Maschine nach Anspruch 7, **dadurch gekennzeichnet, dass** die elektrische Maschine (1) über jedem Leistungsmodul (19) ein dort positioniertes kapazitives Modul (23) umfasst.

11. Maschine nach einem der Ansprüche 1 bis 10, **dadurch gekennzeichnet, dass** der Verschlussdeckel (61) mit wenigstens einer durchgehenden Kühlöffnung (62) versehen ist.

12. Maschine nach einem der Ansprüche 1 bis 11, **dadurch gekennzeichnet, dass** sich wenigstens ein Dämpfungselement (63) zwischen einer Fläche des Gehäuses (33) des kapazitiven Moduls und dem wenigstens einen Kondensator (34) erstreckt.

13. Maschine nach einem der Ansprüche 1 bis 12, **dadurch gekennzeichnet, dass** das kapazitive Modul (23) ein Material zum Füllen (64) wenigstens eines Teils des leeren Raumes umfasst, der nach Aufnahme des wenigstens einen Kondensators (34) in dem Aufnahmebehälter (60) verblieben ist.

14. Maschine nach einem der Ansprüche 1 bis 13, **dadurch gekennzeichnet, dass** das Gehäuse (33) des kapazitiven Moduls (23) zwei Typen von negativen Verbindungsschienen (38) aufnehmen kann, wobei der eine Typ an einen axialen und der andere an einen radialen Kondensator (34) angepasst ist.

## Claims

1. Rotating electrical machine (1) provided with an axis (X), for a motor vehicle provided with a battery, comprising:
- an outer housing (5),
- a rotor rotating about said axis (X) of the machine,
- a stator surrounding said rotor,
- an integrated electronic block (10) comprising power modules (19), said integrated electronic block (10) having a positive terminal B+ (26) intended to be linked to the positive terminal of the battery of the vehicle,
- at least one capacitive module (23) comprising at least one capacitor (34) and a housing (33) receiving said at least one capacitor (34),
said housing (33) comprises a negative terminal (37) and a first so-called negative connection trace (38) which is linked on the one hand to the negative polarity of the at least one capacitor (34) and on the other hand to said negative terminal (37) of said housing (33),
in that said electrical machine further comprises fixing means (39) which mechanically and electrically link said negative terminal (37) of said housing (33) to a part of said outer housing (5) forming a ground of said electrical machine, **characterized in that** said housing (33) comprises a receptacle (60) for receiving the at least one capacitor (34) and a closing cover (61).

2. Machine according to Claim 1, **characterized in that** said housing (33) of said capacitive module (23) comprises a positive terminal (45) and a second so-called positive connection trace (46) which is intended to be linked on the one hand to the positive polarity (45) of the at least one capacitor (34) and on the other hand to said positive terminal (45) of said housing (33), and **in that** said electrical machine further comprises connection means (47) which electrically link said positive terminal of said housing (33) to said terminal B+ (26) .

3. Machine according to Claim 2, **characterized in that** said electrical machine (1) comprises an interconnector (29) and **in that** said connection means (47) comprise:
- a trace (30) of said interconnector (29) linked to said terminal B+ (26), said trace (30) having an annular termination (48), and
- means (49) for pressing said positive terminal (45) of said housing (33) on said annular termination (48) further ensuring a fixing of said housing (33) on said interconnector (29).

4. Machine according to Claim 3, **characterized in that** said pressing means comprise a screw fixed to said outer housing (5) and an insulation element (53) inserted between said screw and said positive terminal (45) of said housing (33) of the capacitive module.

5. Machine according to Claim 2, **characterized in that** said connection means (47) comprise a fork (56) having, at one end, a form complementing a post (57) of said terminal B+ (26) and, at its other end, a connection to said positive terminal (45) of said housing (33).

6. Machine according to any one of Claims 3 to 5, **characterized in that** said outer housing (5) has a substantially cylindrical form and **in that** said housing (33) of said capacitive module (23) is pressed onto the perimeter of said outer housing (5) such that said housing (33) of said capacitive module (23) exhibits a thickness oriented in a radial direction of said outer housing (5).

7. Machine according to Claim 2, **characterized in that** said electrical machine (1) comprises an interconnector (29) and **in that** said connection means (47) comprise a trace (30) of said interconnector (29) linked to said terminal B+ (26) to which is soldered said positive terminal (45) of said housing (33) of the capacitive module.

8. Machine according to Claim 7, **characterized in that** said integrated electronic block (10) comprises a control module (15) ensuring a control of said power modules (19), and **in that** said housing (33) of the capacitive module is positioned above said control module (15).

9. Machine according to Claim 8, **characterized in that** said control module (15) is powered via said positive terminal (45) of said housing (33) of the capacitive module.

10. Machine according to Claim 7, **characterized in that** said electrical machine (1) comprises a capacitive module (23) positioned above each power module (19).

11. Machine according to any one of Claims 1 to 10, **characterized in that** said closing cover (61) is provided with at least one cooling through-opening (62).

12. Machine according to any one of Claims 1 to 11, **characterized in that** at least one damping element (63) extends between a face of said housing (33) of the capacitive module and the at least one capacitor (34).

13. Machine according to any one of Claims 1 to 12, **characterized in that** said capacitive module (23) comprises a filling material (64) for at least a part of the void left by the at least one capacitor (34) in said receptacle (60).

14. Machine according to any one of Claims 1 to 13, **characterized in that** said housing (33) of said capacitive module (23) can receive two types of negative connection traces (38), each of the two types of traces being respectively suited to a capacitor (34) of axial type or of radial type.
